# EUROPEAN PATENT SPECIFICATION

(11) **EP 1 311 158 B1**
(45) Date of publication and mention of the grant of the patent: **11.08.2004**
(21) Application number: 01967287.2
(22) Date of filing: 20.08.2001
(51) Int. Cl.: A01N 37/18, A01N 37/22

(54) **COMPOSITION HAVING INSECT REPELLENT CHARACTERISTICS**
ZUSAMMENSETZUNG MIT INSEKTABSCHRECKENDEN EIGENSCHAFTEN
COMPOSITION PRESENTANT DES PROPRIETES DE SUBSTANCES REPULSIVES D'INSECTES

(30) Priority: 24.08.2000 EP 00810754
(43) Date of publication of application: 21.05.2003
(73) Proprietor: Givaudan SA, 1214 Vernier-Genève (CH)
(72) Inventor: GAUTSCHI, Markus, CH-4314 Zeiningen (CH); BLONDEAU, Philippe, F-75010 Paris (FR)
(74) Representative: Simmons, John Murray, Dr.
(86) International application number: PCT/EP2001/009562
(87) International publication number: WO 2002/015692

(56) References cited:
- WO-A-01/34753
- US-A- 4 150 052
- US-A- 4 530 935

## Description

The present invention relates to the use of certain compounds in compositions having insect repellent characteristics.

Many insects are known as a nuisance and some insect genera even represent a health hazard. Mosquitoes are known to transmit diseases like yellow fever, dengue, encephalitis and malaria. The excrement of cockroaches as well as their dead bodies have been identified as a significant allergen in house dust and cause asthma in children. Therefore, many efforts have been made to eradicate or at least to control these pests. Different effective insecticides have been produced until now, but various insects have developed resistance against them and others have been able to detect and avoid them. As many insecticides have undesirable effects on human and other animal life, their use has often been regulated or even forbidden. Furthermore, the public has become sensitive and tend to question the safety of many chemicals which were formerly taken granted. Further the public ask for products which can be applied at low concentrations.

Due to above mentioned concerns, there is a need for a product based on a different principle to get rid off the insects. As physical barriers to the insects are not always possible, e.g. in the open air, insect repellents have become important.

Certain compounds possessing insect repellent characteristics are known including materials such as citronella oil, tolu and Peru balsams, camphor, etc. Other natural sources have been investigated by researchers, e.g. the repellent effect of various eucalyptus against a selection of pests.

Diethyl-m-toluamide (DEET), which is commercially available as Delphone™, has become a frequently used repellent and is considered to be a general or so called broad spectrum insect repellent. However, fears over possible allergenicity have led to the search for less hazardous insect repellents.

Some cyclohexyl carboxamide derivatives have been described as insect repellents in US 4,530,935. In US 5,182,305 N-aryl and N-cycloalkyl neoalkanamides are described to have insect repellent characteristics. Due to the good substantivity on surfaces they have been applied to, a long lasting repellency can be achieved. Similarly, in US 5,391,578 N-lower alkyl neoalkanamides are described to be superior to DEET in long lasting effectiveness of the insect repellency. In WO 00/16738 menthyl 2-pyrrolidone-5-carboxylate are described to be an effective insect repellent, comparable to DEET.

It was an object of the present invention to provide a composition having an outstanding repellent activity against insects.

It was further an object of the present invention to provide a composition having an outstanding repellent activity against German cockroaches.

It was further an object of the present invention to provide a composition, which is of low toxicity and therefore safe to be applied to the human body, pets and livestock.

Surprisingly, it has been found that compounds of formula I may be used in insect-repellent compositions for application to areas, locations, items, materials and structures, and to surfaces thereof to protect them against insect infestation and damage.

US Patent 4150052 discloses N-substituted p-methane carboxamides as having pronounced physiological cooling activity, which have little or no odor and which are substantially non-toxic. Said compounds may be readily prepared by methods known to those skilled in the art. Such methods include e.g. the reaction of p-menthanecarbonyl chloride, obtained from menthane-3-carboxylic acid with thionyl chloride, with the appropriate amine in presence of a proton scavenger like e.g. pyridine.

These compounds are 3-substituted-p-menthanes of the formula I: 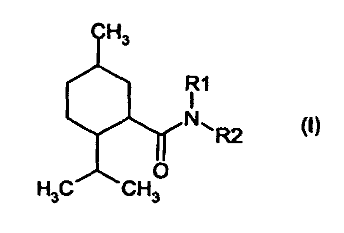 wherein
R¹ and R² represent H or a straight, branched, saturated or unsaturated, aliphatic or heteroaliphatic residue having 1 to 20 carbon atoms, or a cyclic residue having 4 to 8 carbon atoms not counting carbon atoms of optional substiutents to or on the ring system and the number of carbon atoms of the ring system and the substituents to or on the ring system is smaller than 20,
and if R¹ is H, R² may also be a substituted or unsubstituted aryl or heteroaryl residue of with up to 10 carbon atoms for example substituted phenyl, phenalkyl or substituted phenalkyl, naphtyl, pyridyl, or
R¹ and R² may form together with the nitrogen atom to which they are attached, a cyclic or heterocyclic, saturated or unsaturated ring system having 4 to 8 carbon atoms not counting carbon atoms of optional substiutents to or on the ring system and the number of carbon atoms of the ring system and the substituents to or on the ring system is smaller than 20. Said ring systems may be e.g. piperidino, morpholino etc.

In the above definition the expression "aliphatic or heteroaliphatic residue" embraces e.g. alkyl, cycloalkyl, alkenyl, cycloalkenyl, alkynyl, alkoxyalkyl, aryloxyalkyl, alkylaminoalkyl, arylaminoalkyl and similar combinations.

The compounds for use in the invention have 3 stereogenic centers, giving rise to 8 stereoisomers. Thus, all possible stereoisomers are included in the scope of the present invention. In general, compounds of the formula (Ia) 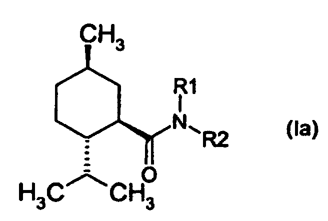 derived from the naturally occurring menthol [(-)3-p-menthanol] are much easier accessible and are therefore preferred.

The following compounds of formula I or Ia are preferred, wherein, in said formula,
R¹ represents H, and R² represents either a straight or branched, saturated or unsaturated, aliphatic or heteroaliphatic residue having 1 to 20 carbon atoms, or cyclic residue having 4 to 8 carbon atoms not counting carbon atoms of optional substiutents to or on the ring system; or
R¹ represents methyl, and R² represents a straight, branched, saturated or unsaturated, aliphatic or heteroaliphatic residue having 1 to 20 carbon atoms, or a cyclic residue having 4 to 8 carbon atoms not counting carbon atoms of optional substiutents to or on the ring system; or
R¹ represents ethyl, and R² represents a straight or branched, saturated or unsaturated aliphatic or heteroaliphatic residue having 1 to 20 carbon atoms, or cyclic residue having 4 to 8 carbon atoms not counting carbon atoms of optional substiutents to or on the ring system ; or
R¹ represents propyl, and R² represents either a straight or branched, saturated or unsaturated aliphatic or heteroaliphatic residue having 4 to 8 carbon atoms not counting carbon atoms of optional substiutents to or on the ring system ; or
R¹ represents H or a straight or branched C₁ to C₆ aliphatic or heteroaliphatic residue and R² represents H or a straight or branched C₁ to C₆ aliphatic or heteroaliphatic residue; or
R¹ represents H and R² represents H or a straight or branched C₁ to C₈ aliphatic or heteroaliphatic residue; or
R¹ represents H and R² represents represents a substituted or unsubstituted aryl or heteroaryl residue with up to 10 carbon atoms; or
R¹ and R² form together with the nitrogen atom to which they are attached, a cyclic or heterocyclic, saturated or unsaturated ring system having 4 to 8 carbon atoms not counting carbon atoms of optional substiutents to or on the ring system.

Further preferred compounds are
N-methyl-p-menthane-3-carboxamide,
N-ethyl-p-menthane-3-carboxamide,
N-propyl-p-menthane-3-carboxamide,
N-isopropyl-p-menthane-3-carboxamide,
N-butyl-p-menthane-3-carboxamide,
N-sek-butyl-p-menthane-3-carboxamide,
N-tert-butyl-p-menthane-3-carboxamide,
N-pentyl-p-menthane-3-carboxamide,
N-isopentyl-p-menthane-3-carboxamide,
N-hexyl-p-menthane-3-carboxamide,
N-octyl-p-menthane-3-carboxamide,
N-ethylhexyl-p-menthane-3-carboxamide,
N,N-dimethyl-p-menthane-3-carboxamide,
N,N-diethyl-p-menthane-3-carboxamide,
N,N-dipropyl-p-menthane-3-carboxamide,
N,N-dibutyl-p-menthane-3-carboxamide,
N,N-dihexyl-p-menthane-3-carboxamide,
N,N-ditridecylamin-p-menthane-3-carboxamide,
N-methyl-N-butyl-p-menthane-3-carboxamide, and
N-ethyl-N-butyl-p-menthane-3-carboxamide.

Compositions for use according to the present invention comprise at least one of the compounds of formula I in an amount effective to repel insects. The amounts in which compounds of formula I are incorporated in the various compositions described below vary within a wide range. The amounts depend on the nature and the intended use of the compositions to which they are added and from the presence or absence of other insect repellent agents. Typical concentrations of the compounds of the present invention are from 1 ppm in diluted use form in floor cleaner up to 20% by weight in compositions which are introduced as a concentrate into the final product. Further variations are possible, due to the reason that the concentration range is considered as not critical.

Compositions comprising a compound of formula I or Ia are applied to objects, which are to be protected against insects, either directly, in liquid solution or dispersion, as aerosols or airsprays, or dispersed in a powdered carrier or in a suitable composition.

Products which are useful to repel insects are for example detergent compositions, cleaning compositions, paints, wallpaper, upholstery and/or rug shampoos, liquid soaps, soap bars, floor polishes, floor waxes, furniture polishes, etc. Products which are useful to repel insects from the human body are also included in the scope of the present invention and include compositions such as fine fragrances, colognes, skin creams, sun cremes, skin lotions, deodorants, talcs, bath oils, soaps, shampoos, hair conditioners and styling agents.

The compositions for use in the present invention may comprise compounds of formula I in combination with other known insect repellents, including, but not limited to, N,N-diethyl-m-toluamide (DEET), N,N-diethyl-benzamide, menthyl 2-pyrrolidone-5-carboxylate, N-aryl and N-cycloalkyl neoalkanamides, N-lower alkyl neoalkanamides and nepetalactone. The compositions of the present invention may also comprise natural oils known for their insect repellent characteristics. Examples for such oils include, without limiting, e.g. citronella oil, catnip oil, eucalyptus oil, cypress oil, galbanum oil, tolu and Peru balsams.

Compounds of formula I may also be used as insecticides in order to repel insects from one area and toward the location, where the insecticide is applied to avoid the action of the insecticide in a special area, such as kitchen etc. Alternatively, compounds of formula I may be formulated with insecticides so that after loosing the repellent activity the treated area will still not be safe for insects.

Compounds of formula I may be added to a liquid composition either directly or, preferably, by admixing a compound of formula I with one or more fragrance compounds, fragrance compositions and the like and adding the resulting mixture to the composition. Such fragrance compounds may be of natural and/or synthetic origin, examples for such natural and synthetic fragrance ingredients can be found e.g. in "Perfume and Flavor Materials of Natural Origin", S. Arctander, Ed., Elizabeth, N.J., 1960 and "Perfume and Flavor Chemicals", S. Arctander, Ed., Vol. I & II, Allured Publishing Corporation, Carol Stream, USA, 1994. Compounds of formula I may also be added to the composition of the present invention in form of a solution. Solvents which may be used are known to those skilled in the art and include e.g. ethanol, ethylene glycol, propylene glycol, diethyl phthalate and dimethyl phthalate. As a preferred solvent dimethyl phthalate is used, which is known for its insect repellent characteristics.

The compositions for use in the present invention may comprise other ingredients normally used in the formulation of said compositions. Such ingredients are known to those skilled in the art and include e.g. antifoaming agents, antimicrobial agents, antioxidants, antiredeposition agents, bleaches, colorants, emulsifiers, enzymes, fats, fluorescers, fungicides, hydrotropes, moisturizers, optical brighteners, perfume carriers, perfume, preservatives, proteins, silicones, soil release agents, solubilizers, sugar derivatives, sun screens, surfactants, vitamins, waxes, etc.

Compounds of formula I have an outstanding effect both as contact and vapor repellent. They are superior to various commercial insect repellents in repelling action, especially against German cockroaches, which are considered to be the most difficult household pest to control. Due to their low vapor pressure the compounds of formula I are long-lasting on surfaces they have been applied to. The long-lasting insect repellency may last up to 2-3 weeks after topical application, depending on the concentration used. Furthermore, compounds of formula I are sufficiently stable in the compositions being object of the present invention to maintain their insect repellency.

Compositions for use in the present invention may also be incorporated in various materials during their manufacturing process. Methods for preparing a product formula I are long-lasting on surfaces they have been applied to. The long-lasting insect repellency may last up to 2-3 weeks after topical application, depending on the concentration used. Furthermore, compounds of formula I are sufficiently stable in the compositions being object of the present invention to maintain their insect repellency.

Compositions of the present invention may also be incorporated in various materials during their manufacturing process. Methods for preparing a product comprising a composition according to the present invention by incorporating said composition into the product during extrusion are preferred.

Compounds of formula I also indicate that they are beside their effectiveness against German cockroaches also effective against other insects such as ants, bees, fleas, flies, hornets, mosquitoes, moths, silverfish, and wasps and against arachnids such as mites, spiders and ticks.

The effectiveness against mosquitoes is important also due to economic reasons, especially against the genera Anopheles (which is a known carrier of malaria and transmits also filariasis and encephalitis), Culex (which is a carrier of viral encephalitis and filariasis) and Aedes (which carries yellow fever, dengue and encephalitis). From the latter genus, the activity against Aedes aegypti is especially important.

The invention will be further described, by way of illustration, in the following examples.

### Example 1:

Compounds of formula I and Ia have been prepared according to the procedure described in US 4,150,052 (Watson et. al, May 16, 1977) from p-menthane-3-carboxylic acid.
**N-methyl-p-menthane-3-carboxamide (1):**
   ^{**1**}**H-NMR** (400 MHz, CDCl₃): 0.77 (d, 3H, J = 6.9, CH₃); 0.89 (d, 3H, J = 6.3, CH₃); 0.90 (d, 3H, J = 7.0, CH₃); 0.90-1.06 (m, 2H, CH₂); 1.25 (quint., 1H, J = 12.0, CH); 1.27-1.38 (m, 1H, CH); 1.53 (tt, 1H, J = 11.3, 2.8, CH); 1.64-1.80 (m, 4H, 2CH₂); 1.99 (td, 1H, J = 11.3, 3.4, CH); 2.81 (d, 3H, J = 4.8, CH₃); 5.56 (br., 1H, NH).
   **IR** (νₘₐₓ, cm⁻¹, ATR): 3275m, 2957m, 2928m, 1636s, 1558m.
   **MS** [m/z (EI)]: 197 (M⁺, 15%), 154 (20), 86 (95), 73 (100), 58 (35), 55 (43).
**N-ethyl-p-menthane-3-carboxamide (2) :**
   ^{**1**}**H-NMR** (400 MHz, CDCl₃): 0.78 (d, 3H, J = 6.9, CH₃); 0.89 (d, 3H, J = 6.4, CH₃); 0.90 (d, 3H, J = 6.9, CH₃); 0.89-1.07 (m, 2H, CH₂); 1.12 (t, 3H, J = 7.0, CH₃); 1.27 (quint., 1H, J = 12.0, CH); 1.22-1.40 (m, 1H, CH); 1.44-1.60 (m, 1H, CH); 1.62-1.82 (m, 4H, 2CH₂); 1.98 (td, 1H, J = 11.4, 3.3, CH); 3.20-3.40 (m, 2H, NCH₂); 5.52 (br., 1H, NH).
   **IR** (νₘₐₓ, cm⁻¹, ATR): 3270m, 2957m, 2925m, 2869m, 1637s, 1559m.
   **MS** [m/z (EI)]: 211 (M⁺, 15%), 168 (20), 100 (97), 87 (100), 83 (22), 72 (36), 55 (50), 44 (32).
**N-propyl-p-menthane-3-carboxamide (3) :**
   ^{**1**}**H-NMR** (400 MHz, CDCl₃): 0.78 (d, 3H, J = 6.9, CH₃); 0.88-0.94 (m, 9H, CH₂, 3CH₃); 0.90-1.07 (m, 2H, CH₂); 1.25 (quint., 1H, J = 12.1, CH); 1.27-1.40 (m, 1H, CH); 1.47-1.56 (m, 3H, CH, CH₂); 1.65-1.78 (m, 4H, 2CH₂); 1.98 (td, 1H, J = 11.4, 3.3, CH); 3.13-3.30 (m, 2H, CH₂); 5.56 (br., 1H, NH).
   **IR** (νₘₐₓ, cm⁻¹, ATR): 3286m, 2956m, 2920m, 1637s, 1553m.
   **MS** [m/z (EI)]: 225 (M⁺, 15%), 182 (18), 114 (82), 101 (100), 86 (28), 55 (45), 43 (52).
**N-phenyl-p-meathane-3-carboxamide (4) :**
   ^{**1**}**H-NMR** (400 MHz, CDCl₃): 0.83 (d, 3H, J = 6.9, CH₃); 0.91 (d, 3H, J = 6.3, CH₃); 0.92 (d, 3H, J = 6.9, CH₃); 0.95-1.10 (m, 2H, CH₂); 1.32 (quint., 1H, J = 12.0, CH); 1.30-1.45 (m, 1H, CH); 1.59-1.92 (m, 5H, CH, 2CH₂); 2.16 (td, 1H, J = 11.3, 3.5, CH); 7.09 (t, 1H, J = 6.4); 7.25 (br., 1H, NH); 7.31 (m, 2H); 7.53 (dd, 2H, J = 8.6, 1.0).
   **IR** (νₘₐₓ, cm⁻¹, ATR): 3250m, 2963m, 1651s, 1597s, 1537s, 1442s, 753s.
   **MS** [m/z (EI)]: 259 (M⁺, 4%), 135 (7), 93 (100), 83 (44), 55 (32).
**N,N-dimethyl-p-menthane-3-carboxamide (5) :**
   ^{**1**}**H-NMR** (400 MHz, CDCl₃): 0.73 (d, 3H, J = 6.9, CH₃); 0.89 (d, 3H, J = 6.4, CH₃); 0.90 (d, 3H, J = 6.9, CH₃); 0.92-1.16 (m, 2H, CH₂); 1.18 (tt, 1H, J = 12.1, 12.1, CH); 1.30-1.42 (m, 1H, CH); 1.60-1.75 (m, 5H, CH, 2CH₂); 2.54 (td, 1H, J = 10.8, 3.5, CH); 2.95 (s, CH₃); 3.07 (s, CH₃).
   **IR** (νₘₐₓ, cm⁻¹, ATR): 2951m, 2933m, 1639s, 1395m, 1119m.
   **MS** [m/z (EI)]: 211 (M⁺, 30%), 168 (22), 100 (100), 87 (92), 72 (86), 55 (43).
**N,N-diethyl-p-menthane-3-carboxamide (6) :**
   ^{**1**}**H-NMR** (400 MHz, CDCl₃): 0.75 (d, 3H, J = 6.9, CH₃); 0.89 (d, 3H, J = 6.4, CH₃); 0.90 (d, 3H, J = 6.9, CH₃); 0.93-1.08 (m, 2H, CH₂); 1.10 (t, 3H, J = 7.1, CH₃); 1.19 (t, 3H, J = 7.1, CH₃); 1.23 (tt, 1H, J = 11.9, 12.5, CH); 1.30-1.42 (m, 1H, CH); 1.60-1.77 (m, 5H, CH, 2CH₂); 2.43 (td, 1H, J = 11.5, 3.5, CH); 3.28-3.43 (m, 4H, 2NCH₂).
   **IR** (νₘₐₓ, cm⁻¹, ATR): 2954m, 2871m, 1633s, 1429m, 1121m.
   **MS** [m/z (EI)]: 239 (M⁺, 32%), 196 (51), 128 (100), 100 (73), 83 (60), 72 (56), 55 (54), 41 (38).

### Example 2:

The effectiveness of compounds of formula I as an insect repellent was determined using German cockroaches exposed to a formica surface partially treated/partially untreated with a test compound of formula I.

The study was conducted in an air conditioned laboratory at a temperature of 22°±2°C under a normal day/night cycle, using German cockroaches (*Blatella Germanica*) of mixed sex and age. The study was conducted over a 3 day period and the repellent effectiveness assessed 1, 2 and 3 days after cockroach introduction.

### Test method:

A. Treatment
A rectangle of formica 40cm x 30cm was treated at 20 mg/m² with a test compound of formula I. This was achieved by soaking a paper wipe (Rag on a Roll ca 20cm x 20cm) in a solution of the test compound in ethanol, squeezing out the excess liquid and wiping over the surface to give the required coverage. This was checked by weighing the cloth after application. The surface was allowed to dry. A similar rectangle was wiped with ethanol alone (untreated surface).
B. Bioassays
The treated formica rectangle was placed on the bench and a plastic container was placed on the rectangle. This had been treated with fluon to prevent cockroach escape.
Two sheets of formica (10cm x 10cm) were placed on the formica, one on the treated surface and one on the untreated surface. This acted as a cockroach harbourage. The formica sheet to be used in the treated section was treated at the same rate as the treated formica. The formica was placed on two 1cm high bottle tops to allow cockroaches access under the formica.
20 German cockroaches were added (5 adults and 15 nymphs) to the centre of the formica. No food and water was supplied for these cockroaches.
At 1, 2 and 3 days after cockroach introduction the number of cockroaches under each harbourage was counted. After each count the harbourage position was changed to avoid the possibility of habituation to one location, the harbourages were replaced and new cockroaches were added to replace any dead cockroaches.
The above was repeated 3 times to provide a total of 4 replicates.
C. Repellency results for compound **1** (example 1):

| **Time After Cockroach Introduction** **(Days)** | **Replicate** | **Number of Cockroaches present** **(n=20)** | | | |
|---|---|---|---|---|---|
| | | **Treated Section** | **Untreated Section** | **Dead** | **Total** |
| | 1 | 5 | 15 | 0 | 20 |
| 1 | | | | | |
| | 2 | 3 | 17 | 0 | 20 |
| | 3 | 7 | 13 | 0 | 20 |
| | 4 | 0 | 20 | 0 | 20 |
| | **Total** | **15** | **65** | **0** | **80** |
| | 1 | 5 | 15 | 0 | 20 |
| 2 | | | | | |
| | 2 | 3 | 17 | 0 | 20 |
| | 3 | 5 | 14 | 1 | 20 |
| | 4 | 0 | 20 | 0 | 20 |
| | **Total** | **13** | **66** | **1** | **80** |
| | 1 | 4 | 16 | 0 | 20 |
| 3 | | | | | |
| | 2 | 3 | 16 | 1 | 20 |
| | 3 | 4 | 16 | 0 | 20 |
| | 4 | 0 | 20 | 0 | 20 |
| | **Total** | **11** | **68** | **1** | **80** |

D. In a similar way the repellency results for compound **2, 3, 4, 5** and **6** were determined. All results are summarized in the table below:

| **Test compound** | **Days After Treatment** | **Percentage Present** | | |
|---|---|---|---|---|
| | | **Treated Section** | **Untreated Section** | **Dead** |
| | | | | |
| **1** | 1 | 18.7 | 81.3 | 0 |
| | 2 | 16.3 | 82.5 | 1.2 |
| | 3 | 13.8 | 85.0 | 1.2 |
| | **Average** | **16.3** | **82.9** | |
| **2** | 1 | 17.5 | 82.5 | 0 |
| | 2 | 16.3 | 82.5 | 1.2 |
| | 3 | 13.8 | 83.7 | 2.5 |
| | **Average** | **15.9** | **82.9** | |
| **3** | 1 | 16.3 | 83.7 | 0 |
| | 2 | 6.3 | 92.5 | 1.2 |
| | 3 | 6.3 | 93.7 | 0 |
| | **Average** | **9.6** | **90.0** | |
| **4** | 1 | 46.3 | 53.7 | 0 |
| | 2 | 35.0 | 65.0 | 0 |
| | 3 | 12.5 | 86.3 | 1.2 |
| | **Average** | **31.3** | **68.3** | |
| **5** | 1 | 15.0 | 85.0 | 0 |
| | 2 | 10.0 | 88.8 | 1.2 |
| | 3 | 15.0 | 83.8 | 1.2 |
| | **Average** | **13.3** | **85.9** | |
| **6** | 1 | 11.3 | 88.7 | 0 |
| | 2 | 13.8 | 86.2 | 0 |
| | 3 | 6.3 | 91.2 | 2.5 |
| | **Average** | **10.5** | **88.7** | |
| | | | | |

All compounds showed good to very good cockroach repellency up to 3 days in this screening experiment.

### Example 3:

The effectiveness of compound 2 (example 1) as an insect repellent was determined using German cockroaches exposed to a formica surface partially treated/partially untreated, and was directly compared to the repellency of the well known insect repellents DEET (N,N-diethyl-metatoluamide) and N-methyl-neodecanamide.

The study was conducted in an air conditioned laboratory at a temperature of 22°±2°C under a normal day/night cycle, using German cockroaches (*Blatella Germanica*) of mixed sex and age. The study was conducted over a 7 days period and the repellent effectiveness was assessed 1, 3, 5 and 7 days after cockroach introduction. Each tray used in the study consisted of a melamine square tray of sides 1.8m x 1.8m and 20cm high walls. The upper part of the wall was provided with electrical strip, which prevented cockroaches escaping.

### Test method:

A. Treatment
A square of vinyl 90cm x 180cm was treated with the test compound at 20mg/m². This was achieved by soaking a paper wipe (Rag on a Roll, ca. 20cm x 20cm) in a solution of the test compound in ethanol, squeezing out the excess liquid and wiping over the surface to give the required coverage. This was checked by weighing the cloth after application. The surface was allowed to dry.
B. Bioassays
The treated vinyl square was placed in one half of the tray. A similar untreated square was placed in the other half of the tray. This square was treated with ethanol alone.
Two sheets of formica (30cm x 30cm) were placed at one corner of each tray, one on the treated surface and one on the untreated surface. This acted as a cockroach harbourage. The formica sheet to be used in the treated section was treated at the same rate as the treated formica. The formica was placed on two 1cm high bottle tops to allow cockroaches access under the formica.
50 German cockroaches were added (15 adults and 35 nymphs) to the middle of the tray. No food and water was supplied for these cockroaches.
At 1, 2, 3 and 7 days after cockroach introduction the number of cockroaches under each harbourage was counted. After each count the harbourage position was changed to avoid the possibility of habituation to one location, the harbourages were replaced and new cockroaches were added to replace any dead cockroaches.
The above was repeated 3 times to provide a total of 4 replicates.
C. Repellency results for compound 2 (example 1):

| **Time After Cockroach Introduction** **(Days)** | **Replicate** | **Number of Cockroaches Present n=50** | | | |
|---|---|---|---|---|---|
| | | **Treated Section** | **Untreated Section** | **Dead** | **Total** |
| | 1 | 0 | 50 | 0 | .50 |
| 1 | | | | | |
| | 2 | 0 | 49 | 1 | 50 |
| | 3 | 3 | 47 | 0 | 50 |
| | 4 | 0 | 50 | 0 | 50 |
| | **Total** | **3** | **196** | **1** | **200** |
| | 1 | 0 | 50 | 0 | 50 |
| 2 | | | | | |
| | 2 | 1 | 49 | 0 | 50 |
| | 3 | 0 | 50 | 0 | 50 |
| | 4 | 0 | 49 | 1 | 50 |
| | **Total** | **1** | **198** | **1** | **200** |
| | 1 | 6 | 44 | 0 | 50 |
| 3 | | | | | |
| | 2 | 3 | 47 | 0 | 50 |
| | 3 | 0 | 50 | 0 | 50 |
| | 4 | 0 | 49 | 1 | 50 |
| | **Total** | **9** | **190** | **1** | **200** |
| | 1 | 7 | 43 | 0 | 50 |
| 7 | | | | | |
| | 2 | 19 | 30 | 1 | 50 |
| | 3 | 3 | 47 | 0 | 50 |
| | 4 | 11 | 38 | 1 | 50 |
| | **Total** | **40** | **158** | **2** | **200** |

D. In a similar way the repellency results for DEET and N-methyl-neodecanamide were determined. All results are summarized in the table below:

| **Treatment** | **Days after Treatment** | **Percentage Present** | | |
|---|---|---|---|---|
| | | **Treated Section** | **Untreated Section** | **Dead** |
| **2** | 1 | 1.5 | 98.0 | 0.5 |
| | 2 | 0.5 | 99.0 | 0.5 |
| | 3 | 4.5 | 95.0 | 0.5 |
| | 7 | 20.0 | 79.0 | 1.0 |
| **DEET** | 1 | 3.0 | 96.5 | 0.5 |
| | 2 | 2.5 | 96.0 | 1.5 |
| | 3 | 27.5 | 72.0 | 0.5 |
| | 7 | 55.0 | 44.0 | 1.0 |
| **N-Methyl-neodecanamide** | 1 | 0.0 | 99.5 | 0.5 |
| | 2 | 11.5 | 88.5 | 0.0 |
| | 3 | 36.5 | 62.5 | 1.0 |
| | 7 | 45.0 | 54.0 | 1.0 |

Compound **2** provided excellent repellency with less than 5% cockroaches present on the treated surface at 3 days and only 20% after 7 days. The results obtained are far better than for the benchmark repellents DEET and N-methyl-neodecanamide.

### Example 4:

The effectiveness of compound 2 (example 1) as an insect repellent was determined using ants exposed to a formica surface partially treated/partially untreated with compound **2**, and was directly compared to the repellency of the well known insect repellents Farnesol and Dihydrofarnesal.

The study was conducted in an air conditioned laboratory at a temperature of 22°±2°C under a normal day/night cycle, using Black Ants (*Ochetellus* sp) of mixed sex and age. The study ws conducted over a 3 day period and the repellent effectiveness assessed 1, 2 and 3 days after ant introduction.

### Test method:

A. Treatment
One half of a rectangle of formica 40cm x 30cm was treated at 20mg/m² with the test compounds. This was achieved by soaking a paper wipe (Rag On A Roll approximately 20cm x 20cm) in a solution of the test compound in ethanol, squeezing out the excess liquid and wiping over the surface to give the required coverage. This was checked by weighing the cloth after application. The surface was allowed to dry. The other half was wiped with ethanol alone (untreated surface).
B. Bioassays
The treated formica rectangle was placed on the bench and a glass ring (diameter 20cm) was placed on the rectangle. This had been treated with fluon to prevent ant escape.
A small plastic container 2cm in diameter was placed on the formica, one on the treated surface and one on the untreated surface. The plastic container placed on the treated surface had repellent applied in the same way as the treated formica. The plastic container on the untreated surface was wiped with ethanol.
24 hours after treatment (1 day) 20 ants were added to the centre of the formica. No food and water was supplied for these ants. 2 hours after this the number of ants on the treated and untreated surfaces was counted.
The above was repeated 3 times to provide a total of 4 replicates.
The above was repeated at 2 days and 3 days. New ants were used at each time period.
C. Ant Repellency results for compound **2** (example 1).

| **Time After Ant Introduction** **(Days)** | **Replicate** | **The Number of Black Ants Present** **n=20** | | | |
|---|---|---|---|---|---|
| | | **Treated Section** | **Untreated Section** | **Dead** | **Total** |
| | 1 | 0 | 20 | 0 | 20 |
| 1 | | | | | |
| | 2 | 2 | 18 | 0 | 20 |
| | 3 | 1 | 19 | 0 | 20 |
| | 4 | 0 | 20 | 0 | 20 |
| | **Total** | **3** | **77** | **0** | **80** |
| | 1 | 1 | 19 | 0 | 20 |
| 2 | | | | | |
| | 2 | 3 | 17 | 0 | 20 |
| | 3 | 2 | 18 | 0 | 20 |
| | 4 | 3 | 17 | 0 | 20 |
| | **Total** | **9** | **71** | **0** | **80** |
| | 1 | 0 | 20 | 0 | 20 |
| 3 | | | | | |
| | 2 | 1 | 19 | 0 | 20 |
| | 3 | 2 | 18 | 0 | 20 |
| | 4 | 3 | 17 | 0 | 20 |
| | **Total** | **6** | **74** | **0** | **80** |

D. In a similar way the ant repellency results for Farnesol and Dihydrofarnesal were determined. All results are summarized in the table below:

| **Treatment** | **Days After Treatment** | **Percentage Present** | | |
|---|---|---|---|---|
| | | **Treated Section** | **Untreated Section** | **Dead** |
| **Dihydrofarnesal** | 1 | 20.0 | 80.0 | 0 |
| | 2 | 21.2 | 78.8 | 0 |
| | 3 | 12.5 | 87.5 | 0 |
| | **Average** | **17.9** | **82.1** | **0** |
| **Farnesol** | 1 | 20.0 | 80.0 | 0 |
| | 2 | 10.0 | 90.0 | 0 |
| | 3 | 20.0 | 80.0 | 0 |
| | **Average** | **16.7** | **83.3** | **0** |
| **2** | 1 | 3.7 | 96.3 | 0 |
| | 2 | 11.2 | 88.8 | 0 |
| | 3 | 7.5 | 92.5 | 0 |
| | **Average** | **7.5** | **92.5** | **0** |

All 3 products gave repellency of ants at the three time periods (1, 2 and 3 days) after treatment and there was no reduction in repellency at 3 days. The average percentage of ants on the treated section was approximately 17% for Dihydrofarnesol and Farnesol. The compound **2** of the present invention was superior to these two products and gave an average percentage of ants on the treated of 7.5%.

### Example 5:

The effectiveness of compound **2** (example 1) to reduce the presence of cloth moths on woolen cloth was determined and was directly compared to the repellency of the well known moth repellents Citronellol and Farnesol.

The study was conducted in an air conditioned laboratory at a temperature of 22°±2°C under a normal day/night cycle, using Casemaking Clothes Moths (*Tinea pellionella*) of mixed sex and age. The study is conducted over a 5 days period and the repellent effectiveness was assessed as follows:
Adults - 2 days after insect introduction

### Test Method:

A. Treatment
A 10cm x 10cm square of black woolen fabric free of bactericide) was soaked in a solution of the candidate repellent in ethanol at 20g/L, squeezed and allowed to dry. The woollen square was placed in a small box (5cm x 10cm x 10cm) which was open at one end to allow entry of adult clothes moth.
A similar square of fabric treated with ethanol (control) was placed in another box of the same size.
B. Bioassays
These two boxes were placed in an aquarium and 50 mixed sex adult moths were added. These were provided with food and water and left for 5 days.
At the end of 2 days the number of adult moths in each box was counted.
The above was repeated 3 times to provide 4 replicates.
C. Adult Moth Repellency results

| **Compound** | **Time After Moth Introduction** **(Days)** | **Replicate** | **The Number of Moths Present (n=50)** | |
|---|---|---|---|---|
| | | | **Treated Section** | **Untreated Section** |
| | | 1 | 6 | 9 |
| **2** | 2 | | | |
| | | 2 | 7 | 19 |
| | | 3 | 11 | 27 |
| | | 4 | 8 | 22 |
| | | **Total (%)** | **32 (29.4%)** | **77 (70.6%)** |
| | | 1 | 7 | 20 |
| **Citronellol** | 2 | | | |
| | | 2 | 0 | 12 |
| | | 3 | 5 | 26 |
| | | 4 | 14 | 25 |
| | | **Total (%)** | **26 (23.9%)** | **83 (76.1%)** |
| | | 1 | 9 | 18 |
| **Farnesol** | 2 | | | |
| | | 2 | 4 | 19 |
| | | 3 | 5 | 21 |
| | | 4 | 9 | 19 |
| | | **Total (%)** | **27 (26.0%)** | **77 (74.0%)** |

E. Results
Adult repellency:
Compound **2** of the present invention shows similar repellency activity as the benchmark repellents Citronellol and Farnesol and differences are small (range 23.9% to 29.4% of adults on treated surfaces).

### Example 6:

### Cockroach repellency test in floor cleaner application

The effectiveness of the compounds of formula I as an insect repellent was tested using German cockroaches (Blattella germanica) exposed to a surface partially treated/partially untreated with a test compound of formula I. The effectiveness was measured by counting in regular intervals the number of cockroaches in the two sectors of the test area and by observation of the behavior of the cockroaches.

A test room of 30 m³, having a ground surface area of 12 m² was used for the tests, fulfilling the test norms AFNOR NF T 72-320 for efficiency tests of the aerosol type.

Test insects: German cockroaches (*Blattella germanica*), both sexes, 2 to 15 days old (origin standard INA).

The ground surface of the room was divided diagonally into two equal pieces by black adhesive tape. In the middle of the area a circle having 30 cm in diameter was marked.

One half of the surface, with the exception of the circle in the middle, was treated with 5 ml of a cleaning solution comprising the compound of formula I to be tested.

After the treated surface was dry again, 40 cockroaches were placed in the circle in the middle of the surface. During a period of 1 hour the positions of the cockroaches were determined every 5 minutes.

For each time point the number of insects (in %) on the untreated side was determined.

### Example 7:

N-ethyl-p-menthane-3-carboxamide (**2**) was added at 0.05% by weight to a regular all-purpose cleaner (APC), prepared according to example 10. This floor cleaner base was diluted at 2% into water and 5 ml of this solution A is applied to one half of the test surface (example 1).

Similarly, a solution B, comprising nepetalactone (benchmark), was prepared and tested. The results are summarized in the table below:

| Compound | % insects on untreated side | |
|---|---|---|
| | after 5 min | after 1 h |
| APC base, no additives | 42% | 45% |
| Solution B, nepetalactone | 81% | 77% |
| Solution A, Compound **2**, example 1 | 86% | 91% |

The APC containing compound 2 exhibited very good repellency, far better than the APC containing the benchmark repellent nepetalactone.

### Example 8:

The effectiveness of perfume compositions to repel ants was determined by analyzing data of counts of ants on the treated side of arenas half-treated with the test perfume compositions. Insects used for this study were pharaoh ants (*Monomorium pharaonis*), active workers from a wild colony. All ants were checked prior to the test to see whether their antennae are intact. Per replicate 20 ants were used.

### Test method:

A. Treatment
   One half of a 40cm x 70cm arena was treated at 10 g/m² with the test solution. This was achieved by direct spraying ethanolic solutions containing 0.5% perfume A and B, respectively, to the floor of the arenas. The pump sprays were weighed before and after. The other half of the arena was treated with ethanol alone.
B. Bioassay
   The ants were introduced to the arena on the untreated side and their behavior monitored by recording whether the ants that approach the product boundary cross the boundary or turn away and avoid crossing. To ensure that there was no directional bias to the ants behavior, the arenas were rotated through 180°. Their behavior was monitored by recording whether the ants that approached the product boundary crossed or turned away. For each test 2 replicates were conducted.
C. Data Analysis
   The repellency results were calculated using the following equations: Repellency = (number of ants turning away from the boundary / number of ants approaching the boundary) x 100.

### Example 9:

The effectiveness of a perfume composition comprising compound **2** (example 1) to repel ants was determined according to the procedure described in example 8. The repellency of this perfume composition (perfume A) was compared to a composition without compound **2** (perfume B).

| Composition of the tested perfumes A and B: | | |
|---|---|---|
| **Ingredients** | **Parts per weight** | |
| | **Perfume A** | **Perfume B** |
| Bergamotte Essence Italie | 100.0 | 100.0 |
| Canelle Essence Chine | 2.0 | 2.0 |
| Farnesol¹⁾ | 4.0 | 4. 0 |
| Galbanum Essence | 2.0 | 2.0 |
| Georgywood ²⁾ | 15.0 | 15.0 |
| Ionone Beta³⁾ | 25.0 | 25.0 |
| Lavandin Grosso Essence | 50.0 | 50.0 |
| Linalool⁴⁾ | 75.0 | 75.0 |
| Litsea Cubeba Essence | 75.0 | 75.0 |
| Menthe Crepue Essence USA | 2.0 | 2.0 |
| Orange Essence Florida | 200.0 | 200.0 |
| Peonile⁵⁾ | 50.0 | 50.0 |
| Salicylate Benzyle | 250.0 | 250.0 |
| Dipropylene glycol | 0.0 | 150.0 |
| N-ethyl-p-menthane-3-carboxamide (**2**) | 150.0 | 0.0 |
| Total | 1000.0 | 1000.0 |

| | | |
|---|---|---|
| ¹⁾ 3,7,11-Trimethyl-2,6,10-dodecatrien-1-ol | | |
| ²⁾ 1-(1,2,8,8-Tetramethyl-1,2,3,4,5,6,7,8-octahydro-naphthalen-2-yl) | | |
| ³⁾ (3E)-4-(2,6,6-Trimethyl-1-cyclohexen-1-yl)-3-buten-2-one | | |
| ⁴⁾ 3,7-Dimethyl-1,6-octadien-3-ol | | |
| ⁵⁾ 2-Cyclohexylidene-2-phenylacetonitrile | | |

### Repellency Results:

| **Time after ant introduction** | **No. of ants crossing the boundary** | | **No. of ants approaching the boundary** | | **Repellency** | |
|---|---|---|---|---|---|---|
| | Perfume A | Perfume B | Perfume A | Perfume B | **Perfume A** | Perfume B |
| 0 h | 45 | 36 | 47 | 52 | **95.7** | 69.2 |
| 24 h | 32 | 28 | 39 | 43 | **82.0** | 65.1 |
| 48 h | 45 | 31 | 51 | 48 | **88.2** | 64.6 |
| 72 h | 36 | 26 | 49 | 41 | **73.5** | 63.4 |

The perfume A gave very good repellency results against ants ranging from 96% (after application) to 74% (3 days after application) and had overall much better repellency properties than the corresponding perfume without compound **2** (perfume B).

### Example 10:

Compositions suitable for use in the present invention include the following:
A. All Purpose Cleaner (APC CLASSIC: FBA 001)

| **INGREDIENTS** | **CHEMICAL NAME** | **%W/W** |
|---|---|---|
| **PHASE A** | | |
| CITRIC ACID | | 1.05 |
| DEIONISED WATER | | To 100 |

| **PHASE B** | | |
|---|---|---|
| HOSTAPUR SAS 60 | Na paraffin sulfonate | 2.00 |
| NEODOL 91/8 | Ethoxylated fatty alcohol C₉C₁₁ 8EO | 1.00 |
| DOWANOL DPnB | n-Butyl ether of propylene glycol | 4.00 |
| TEA (98%) | Triethanolamine | 1.00 |
| NaOH(50%) | Sodium hydroxide | 1.20 |

| **PHASE C** | | |
|---|---|---|
| PARMETOL DF 35 | | 0.1 |
| N-Ethyl-p-menthane-3-carboxamide | | 0.1 |
| **PROCESS:** While stirring, add one after the other parts A, B and C. The pH value of the finished product is 9.3. | | |

B. All purpose cleaner (APC disinfectant: FBA 005)

| **INGREDIENTS** | **CHEMICAL NAME** | **%W/W** |
|---|---|---|
| DEIONIZED WATER | | To 100 |
| TRISODIUM CITRATE*2H₂O | | 0.8 |
| TRILON B | Tetra sodium salt of EDTA | 0.4 |
| TRILON A 92 | Tri sodium salt of EDTA | 0.2 |
| ARQUAD 16/29 | Hexadecyl trimethyl ammonium chloride | 3.5 |
| NEODOL 45/7 | Ethoxylated fattyalcohol C14-C15 7EO | 1.0 |
| | | |
| BDGE | Butyl dioxitol | 4.0 |
| PARMETOL A 26 | | 0.1 |
| N-Ethyl-p-menthane-3-carboxamide (**2**) | | 0.1 |
| **PROCESS:** Mix at room temperature the different components in the order listed. The pH value of the finished product is 8.10. | | |

C. All purpose cleaner (APC SOAPY CLEANER : FBA 006)

| **INGREDIENTS** | **CHEMICAL NAME** | **%W/W** |
|---|---|---|
| DEIONISED WATER | | 50.00 |
| COCONUT OIL | | 1.00 |
| TEA (98%) | Triethanolamine | 1.50 |
| KOH (50%) | Potassium hydroxide | 0.40 |
| DEIONISED WATER | | 30.00 |
| CARBITOL | Ethoxy diglycol | 3.00 |
| NEODOL 91/8 | Ethoxylated fatty alcohol | 6.00 |
| | C₉C₁₁ 8EO | |
| N-Ethyl-p-menthane-3-carboxamide (**2**) | | 0.10 |
| WATER | | qs to 100.00 |
| **PROCESS:** Heat to 45°C with stirring 50% of the deionised water. Add in order, KOH, TEA and the Coconut Oil. Stir for 15 minutes. Add in order 30% of DI water with stirring, Carbitol, Neodol 91/8 and N-Ethyl-p-menthane-3-carboxamide. Stir for 15 minutes. Add the remaining DI water and adjust the pH to 8.5 with KOH (50%). Stir for 5 minutes. | | |

D. Hydroalcoholic Cream (DED 002)

| **INGREDIENTS** | **CHEMICAL NAME** | **%W/W** |
|---|---|---|
| **PHASE A** | | |
| BRIJ 72 | Steareth-2 | 4.00 |
| BRIJ 721 | Steareth-21 | 2.00 |
| ARLAMOL E | PPG-15 Stearyl Ether | 8.50 |
| STEARYL ALCOHOL | Stearyl alcohol | 1.50 |
| PARAFFIN OIL | Mineral Oil | 4.00 |
| CETIOL OE | Dicaprilyl ether | 3.00 |

| **PHASE B** | | |
|---|---|---|
| CARBOPOL 980 | Carbomer | 0.25 |
| DEMINERALISED WATER | | qsp 100 |

| **PHASE C** | | |
|---|---|---|
| NaOH (10%) | Sodium Hydroxide | qsp pH 6.0 to 6.5 |

| **PHASE D** | | |
|---|---|---|
| ETHYL ALCOHOL 96 | Alcohol | 20.00 |
| N-Ethyl-p-menthane-3-carboxamide (**2**) | | 0.50 |
| **PROCESS:** Disperse Carbopol in water at 45°C, then heat Phase A and B to the same temperature (around 70 °C) under high stirring. When cooled add sodium hydroxide, alcohol and N- Ethyl-p-menthane-3-carboxamide. | | |

E. AHA CREAM GEL: DED 004

| **INGREDIENTS** | **CHEMICAL NAME** | **%W/W** |
|---|---|---|
| CRODAMOL MM | Myristyl Myristate | 3.00 |
| SEPIGEL 305 | Polyacrylamide, C13-C14 Iso-paraffin, Laureth 7 | 4.00 |
| DEIONISED WATER | | qsp 100 |
| AHA CONCENTRATE | Citric acid, tartaric acid, lactic acid, malic acid, ascorbic acid, glycolic acid, salycilic acid | 5.00 |
| GERMABEN II | Propylene glycol, Diazolidinyl urea, Methylparaben, Propylparaben | 1.00 |
| N-Ethyl-p-menthane-3-carboxamide (**2**) | | 0.50 |
| **PROCESS:** Heat CRODAMOL MM to 60°C. At 50°C add SEPIGEL under stirring. Then add water preheated to 50°C under stirring. At 40°C add the rest of the constituents. Adjust the pH with sodium hydroxide (25%) to 4.0. | | |

F. HYDROGEL (DED 005)

| **INGREDIENT** | **CHEMICAL NAME** | **%W/W** |
|---|---|---|
| CARBOPOL 980 | Carbomer | 0.50 |
| PEMULEN TR1 | Acrylate/ C10-C30 Alkyl acrylate crosscopolymer | 0.20 |
| LUBRAGEL CG | Polyglycerylmethacrylate & propylene glycol | 0.50 |
| UCON 75H450 | PEG/PPG-17/6 copolymer | 1.00 |
| GLYCERIN | Glycerol | 4.00 |
| D PANTHENOL | Panthenol | 2.00 |
| HEXYLENE GLYCOL | Hexylene Glycol | 2.00 |
| DEIONISED WATER | | 77.90 |
| GERMALL 115 | Imidazolidinyl Urea | 0.60 |
| DEIONISED WATER | | 10.00 |
| NaOH (10%) | Sodium Hydroxide | qsp pH = 5.50 |
| CREMOPHOR RH 40 | PEG 40 Hydrogenated Castor oil | 1.00 |
| N-Ethyl-p-menthane-3-carboxamide (**2**) | | 0.50 |
| **PROCESS:** Add D-Panthenol and glycerol to the water, then disperse Carbopol 980, then Pemulen TR 1, then add the rest of the constituents. | | |

## Claims

1. The use of a compound of formula I as an insect repellent 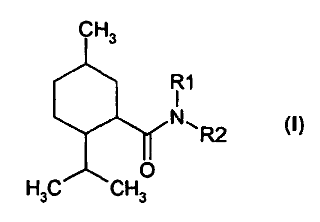 wherein
R¹ and R² represent independently H or a straight or branched, saturated or unsaturated aliphatic or heteroaliphatic residue having 1 to 20 carbon atoms, or a cyclic residue having 4 to 8 carbon atoms not counting optional substituents to or on the ring system;
and if R¹ is H, R² may also be a substituted or unsubstituted aryl or heteroaryl residue with up to 10 carbon atoms, or
R¹ and R² may form together with the nitrogen atom to which they are attached, a cyclic or heterocyclic, saturated or unsaturated ring system having 4 to 8 carbon atoms not counting optional substituents to or on the ring system.

2. The use of a compound according to claim 1 wherein the compound is 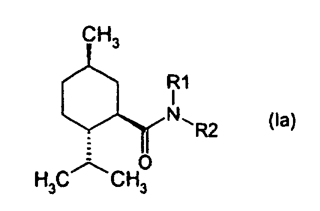 wherein
R¹ and R² have the same meaning as in claim 1.

3. The use of a compound according to any of the preceding claims, wherein in said compound
R¹ represents H, and
R² represents a straight or branched, saturated or unsaturated aliphatic or heteroaliphatic residue having 1 to 20 carbon atoms, or a cyclic residue having 4 to 8 carbon atoms not counting the carbon atoms of optional substituents to or on the ring.

4. The use of a compound according to claim 1 or claim 2, wherein in said compound
R¹ represents methyl, and
R² represents a straight or branched, saturated or unsaturated aliphatic or heteroaliphatic residue having 1 to 20 carbon atoms, or a cyclic residue having 4 to 8 carbon atoms not counting the carbon atoms of optional substituents to or on the ring.

5. The use of a compound according to claim 1 or 2, wherein in said compound
R¹ represents ethyl, and
R² represents a straight or branched, saturated or unsaturated aliphatic or heteroaliphatic residue having 1 to 20 carbon atoms, or a cyclic residue having 4 to 8 carbon atoms not counting the carbon atoms of optional substituents to or on the ring.

6. The use of a compound according claim 1 or 2, wherein in said compound
R¹ represents propyl, and
R² represents a straight or branched, saturated or unsaturated aliphatic or heteroaliphatic residue having 1 to 20 carbon atoms, or a cyclic residue having 4 to 8 carbon atoms not counting the carbon atoms of optional substituents to or on the ring.

7. The use of a compound according claim 1 or 2, wherein in said compound
R¹ represents H or a straight or branched C₁ to C₆ alkyl residue and
R² represents H or a straight or branched C₁ to C₆ aliphatic or heteroaliphatic residue.

8. The use of a compound according to claim 1 or 2, wherein in said compound
R¹ represents H
R² represents H or a straight or branched C₁ to C₈ aliphatic or heteroaliphatic residue.

9. The use of a compound according claim 1 or 2, wherein in said compound
R¹ represents H, and
R² represents a substituted or unsubstituted aryl or heteroaryl residue with up to 10 carbon atoms.

10. The use of a compound according to claim 1 or claim 2, wherein in said compound
R¹ and R² form, together with the nitrogen atom to which they are attached, a cyclic or heterocyclic, saturated or unsaturated ring system having 4 to 8 carbon atoms not counting carbon atoms of optional substitutents to or on the ring system.

11. The use of a compound of formula I or Ia as defined in claim 1 or claim 2 as arachnid repellent.

12. The use of a compound of Formula I or Ia as insect repellent in a composition comprising a compound selected from solvents, fragrance ingredients, insecticides, and insect repellents.

13. The use of a composition according to claim 12 in a product selected from the list of household products, industrial cleansing products, pet and livestock care products, fabrics, plastic materials, and covering materials.

## Patentansprüche

1. Verwendung einer Verbindung der Formel I als Insektenabwehrmittel 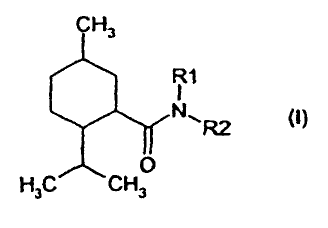 worin
R¹ und R² unabhängig voneinander stehen für H oder einen geraden oder verzweigten, gesättigten oder ungesättigten aliphatischen oder heteroaliphatischen Rest mit 1 bis 20 Kohlenstoffatomen oder einen cyclischen Rest mit 4 bis 8 Kohlenstoffatomen, wobei gegebenenfalls vorhandene Substituenten an oder in dem Ringsystem nicht gezählt sind;
und wenn R¹ für H steht, R² ein substituierter oder unsubstituierter Aryl- oder Heteroaryl-Rest mit bis zu 10 Kohlenstoffatomen sein kann, oder
R¹ und R² zusammen mit dem Stickstoffatom, an das sie gebunden sind, ein cyclisches oder heterocyclisches, gesättigtes oder ungesättigtes Ringsystem mit 4 bis 8 Kohlenstoffatomen bilden, wobei gegebenenfalls vorhandene Substituenten an oder in dem Ringsystem nicht gezählt sind.

2. Verwendung einer Verbindung gemäß Anspruch 1, worin die Verbindung für 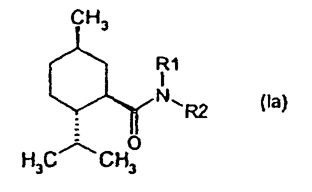 steht, worin
R¹ und R² die gleichen Bedeutungen wie in Anspruch 1 aufweisen.

3. Verwendung einer Verbindung gemäß einem der vorstehenden Ansprüche, worin in der Verbindung
R¹ für H steht und
R² für einen geraden oder verzweigten, gesättigten oder ungesättigten, aliphatischen oder heteroaliphatischen Rest mit 1 bis 20 Kohlenstoffatomen oder einen cyclischen Rest mit 4 bis 8 Kohlenstoffatomen, wobei die Kohlenstoffatome von gegebenenfalls vorhandenen Substituenten an oder in dem Ring nicht gezählt sind, steht.

4. Verwendung einer Verbindung gemäß Anspruch 1 oder Anspruch 2, worin in der Verbindung
R¹ für Methyl steht und
R² für einen geraden oder verzweigten, gesättigten oder ungesättigten, aliphatischen oder heteroaliphatischen Rest mit 1 bis 20 Kohlenstoffatomen oder einen cyclischen Rest mit 4 bis 8 Kohlenstoffatomen, wobei die Kohlenstoffatome von gegebenenfalls vorhandenen Substituenten an oder in dem Ring nicht gezählt sind, steht.

5. Verwendung einer Verbindung gemäß Anspruch 1 oder 2, worin in der Verbindung
R¹ für Ethyl steht und
R² für einen geraden oder verzweigten, gesättigten oder ungesättigten, aliphatischen oder heteroaliphatischen Rest mit 1 bis 20 Kohlenstoffatomen oder einen cyclischen Rest mit 4 bis 8 Kohlenstoffatomen, wobei die Kohlenstoffatome von gegebenenfalls vorhandenen Substituenten an oder in dem Ring nicht gezählt sind, steht.

6. Verwendung einer Verbindung gemäß Anspruch 1 oder 2, wobei in der Verbindung
R¹ für Propyl steht und
R² für einen geraden oder verzweigten, gesättigten oder ungesättigten, aliphatischen oder heteroaliphatischen Rest mit 1 bis 20 Kohlenstoffatomen oder einen cyclischen Rest mit 4 bis 8 Kohlenstoffatomen, wobei die Kohlenstoffatome von gegebenenfalls vorhandenen Substituenten an oder in dem Ring nicht gezählt sind, steht.

7. Verwendung einer Verbindung gemäß Anspruch 1 oder 2, wobei in der Verbindung
R¹ für H oder einen geraden oder verzweigten C₁- bis C₆-Alkylrest steht und
R² für H oder einen geraden oder verzweigten C₁ bis C₆ aliphatischen oder heteroaliphatischen Rest steht.

8. Verwendung einer Verbindung gemäß Anspruch 1 oder 2, wobei in der Verbindung
R¹ für H steht,
R² für H oder einen geraden oder verzweigten C₁ bis C₈ aliphatischen oder heteroaliphatischen Rest steht.

9. Verwendung einer Verbindung gemäß Anspruch 1 oder 2, wobei in der Verbindung
R¹ für H steht und
R² für einen substituierten oder unsubstituierten Aryl- oder Heteroaryl-Rest mit bis zu 10 Kohlenstoffatomen steht.

10. Verwendung einer Verbindung gemäß Anspruch 1 oder Anspruch 2, wobei in der Verbindung
R¹ und R² zusammen mit dem Stickstoffatom, an das sie gebunden sind, ein cyclisches oder heterocyclisches, gesättigtes oder ungesättigtes Ringsystem bilden mit 4 bis 8 Kohlenstoffatomen, wobei Kohlenstoffatome von gegebenenfalls vorhandenen Substituenten an oder in dem Ringsystem nicht gezählt sind.

11. Verwendung einer Verbindung nach Formel I oder Ia, wie in Anspruch 1 oder Anspruch 2 definiert, als Abwehrmittel gegen spinnenartige Tiere oder Arachnide.

12. Verwendung einer Verbindung nach Formel I oder Ia als Insektenabwehrmittel in einer Zusammensetzung, die eine Verbindung umfasst, die ausgewählt ist aus Lösungsmitteln, Duftinhaltsstoffen, Insektiziden und Insektenabwehrmitteln.

13. Verwendung einer Zusammensetzung gemäß Anspruch 12 in einem Erzeugnis, das ausgewählt ist aus der Liste von Haushaltsprodukten, gewerblichen oder industriellen Reinigungsmitteln oder -erzeugnissen, Tier- oder Haustier- und Viehhygiene- oder -gesundheitspflegemitteln, Stoffen, Kunststoffmaterialien und Abdeckungs-, Umkleidungs-, Bezugs- oder Überzugsmaterialien.

## Revendications

1. Utilisation d'un composé de formule I comme insectifuge 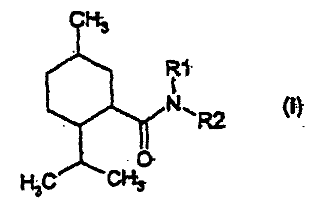 dans laquelle
R¹ et R² représentent indépendamment H ou un résidu aliphatique ou hétéroaliphatique saturé ou insaturé, droit ou ramifié ayant 1 à 20 atomes de carbones ou un résidu cyclique ayant 4 à 8 atomes de carbone sans compter les substituants facultatifs du système cyclique ou sur celui-ci;
et si R¹ représente H, R² peut également être un résidu aryle ou hétéroaryle substitué ou non substitué avec jusqu'à 10 atomes de carbone, ou
R¹ et R² peuvent former avec l'atome d'azote auquel ils sont fixés, un système cyclique ou hétérocyclique, saturé ou insaturé ayant 4 à 8 atomes de carbone sans compter les substituants facultatifs du système cyclique ou sur celui-ci.

2. Utilisation d'un composé selon la revendication 1, dans laquelle le composé est 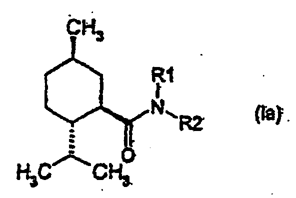 dans lequel
R¹ et R² ont la même signification que dans la revendication 1.

3. Utilisation d'un composé selon l'une quelconque des revendications précédentes, dans lequel dans ledit composé
R¹ représente H, et
R² représente un résidu aliphatique ou hétéroaliphatique saturé ou insaturé, droit ou ramifié ayant 1 à 20 atomes de carbones ou un résidu cyclique ayant 4 à 8 atomes de carbone sans compter les atomes de carbone des substituants facultatifs du cycle ou sur celui-ci.

4. Utilisation d'un composé selon la revendication 1 ou la revendication 2, dans laquelle dans ledit composé
R¹ représente du méthyle, et
R² représente un résidu aliphatique ou hétéroaliphatique saturé ou insaturé, droit ou ramifié ayant 1 à 20 atomes de carbones ou un résidu cyclique ayant 4 à 8 atomes de carbone sans compter les atomes de carbone des substituants facultatifs du cycle ou sur celui-ci.

5. Utilisation d'un composé selon la revendication 1 ou 2, dans laquelle dans ledit composé
R¹ représente de l'éthyle, et
R² représente un résidu aliphatique ou hétéroaliphatique saturé ou insaturé, droit ou ramifié ayant 1 à 20 atomes de carbones ou un résidu cyclique ayant 4 à 8 atomes de carbone sans compter les atomes de carbone des substituants facultatifs du cycle ou sur celui-ci.

6. Utilisation d'un composé selon la revendication 1 ou 2, dans laquelle dans ledit composé
R¹ représente du propyle, et
R² représente un résidu aliphatique ou hétéroaliphatique saturé ou insaturé, droit ou ramifié ayant 1 à 20 atomes de carbones ou un résidu cyclique ayant 4 à 8 atomes de carbone sans compter les atomes de carbone des substituants facultatifs du cycle ou sur celui-ci.

7. Utilisation d'un composé selon la revendication 1 ou 2, dans laquelle dans ledit composé
R¹ représente H ou un résidu alkyle en C₁ à C₆ droit ou ramifié et
R² représente H ou un résidu aliphatique ou hétéroaliphatique en C₁ à C₆ droit ou ramifié.

8. Utilisation d'un composé selon la revendication 1 ou 2 dans laquelle dans ledit composé
R¹ représente H
R² représente H ou un résidu aliphatique ou hétéroaliphatique en C₁ à C₈ droit ou ramifié.

9. Utilisation d'un composé selon la revendication 1 ou 2, dans laquelle dans ledit composé
R¹ représente H
R² représente un résidu aryle ou hétéroaryle substitué ou non substitué avec jusqu'à 10 atomes de carbone.

10. Utilisation d'un composé selon la revendication 1 ou la revendication 2, dans laquelle dans ledit composé
R¹ et R² forment avec l'atome d'azote auquel ils sont fixés, un système cyclique ou hétérocyclique, saturé ou insaturé ayant 4 à 8 atomes de carbone sans compter les atomes de carbone des substituants facultatifs du système cyclique ou sur celui-ci.

11. Utilisation d'un composé de formule I ou Ia comme définie dans la revendication 1 ou la revendication 2 en tant que répulsif pour araignées.

12. Utilisation d'un composé de formule I ou Ia en tant qu'insectifuge dans une composition comprenant un composé choisi parmi les solvants, les ingrédients parfumés, les insecticides et les insectifuges.

13. Utilisation d'une composition selon la revendication 12 dans un produit choisi dans la liste contenant les produits ménagers, les produits de nettoyage industriel, les produits de soin pour les animaux familiers et pour le bétail, les tissus, les matériaux plastiques et les matériaux de revêtement.
